# EUROPEAN PATENT APPLICATION

(11) **EP 3 144 878 A1**
(43) Date of publication of application: **22.03.2017**
(21) Application number: 15895062.6
(22) Date of filing: 07.12.2015
(51) Int. Cl.: G06Q 50/28, G06Q 30/06, G06Q 50/30

(54) **PRODUCT OF INTEREST PRECEDENT DELIVERY SERVICE PROVIDING DEVICE AND METHOD USING UNMANNED COURIER BOX, AND RECORDING MEDIUM ON WHICH COMPUTER PROGRAM IS RECORDED**

(30) Priority: 12.06.2015 KR 20150083267
(71) Applicant: SK Planet Co., Ltd., Seongnam-si, Gyeonggi-do 13487 (KR)
(72) Inventor: HONG, Sung Yoon, Gwangju-si Gyeonggi-do 12771 (KR); KIM, Tae Yong, Seoul 07546 (KR); OH, Byoung Moon, Seoul 07211 (KR); CHOI, Hwan Won, Seoul 04780 (KR)
(74) Representative: Thorniley, Peter
(86) International application number: PCT/KR2015/013332
(87) International publication number: WO 2016/199994

(57) **Abstract**

The present invention relates to a product of interest anticipatory shipping service providing device using an unmanned parcel box, a method thereof, and a non-transitory computer readable storage medium having a computer program recorded thereon, and more particularly, to a product of interest anticipatory shipping service providing device using an unmanned parcel box which determines a product of interest of a user to anticipatorily ship the product to an unmanned parcel box of the user and then allow the user to receive the product of interest immediately after purchasing the product of interest, a method thereof, and a non-transitory computer readable storage medium having a computer program recorded thereon. According to the present invention, when a user hesitates to buy a product of interest, the product of interest is anticipatorily shipped so as to be purchased by the user, so that the purchase of the user is aggressively induced, thereby maximizing the sales and helping the user to make a decision to purchase the product.

## Description

### BACKGROUND OF THE INVENTION

### 1. Field of the Invention

The present invention relates to a product of interest anticipatory shipping service providing device using an unmanned parcel box, a method thereof, and a non-transitory computer readable storage medium having a computer program recorded thereon, and more particularly, to a product of interest anticipatory shipping service providing device using an unmanned parcel box which determines a product of interest of a user to anticipatorily ship the product to an unmanned parcel box of the user and then allow the user to receive the product of interest immediately after purchasing the product of interest, a method thereof, and a non-transitory computer readable storage medium having a computer program recorded thereon.

### 2. Description of the Related Art

Currently, various techniques which analyze a product of interest of a user and recommend the product of interest are appearing in order to maximize sales of online shopping and increase the frequency of visiting the online shopping mall.

For example, there is a product recommending service providing method which obtains a user profile using shopping behavior information of the user on a bookmark of the user and searched products, searches for a client having a similar product preference to the product according to the user profile, and determines a recommending product list using a reference frequency on the preferred product of the searched user and then provides the recommending product list to a user terminal.

However, the product recommendation providing method described above is constituted by a system which simply recommends a product, which may hardly result in purchasing the product. Further, the above-mentioned method arbitrarily curates a product to the user, so that it is hard to aggressively induce the user to purchase the product.

Therefore, in order to solve the above-mentioned problem, development of a more aggressive curation system for a user is demanded.

### [Related Art Document]

### [Patent Document]

Korean Registered Patent No. 10-1034101 (entitled System and method for providing product recommendation service)

### SUMMARY OF THE INVENTION

An object of the present invention is to aggressively induce a user who visits an online shopping mall and has a product of interest, but does not have confidence to purchase the product by shipping the product to an unmanned parcel box which is close to an address of the user.

Further, another object of the present invention is to implement a revolutionary user experience which allows a user to immediately receive the product without waiting a time to ship the product and conveniently return the product when the user does not want to purchase the product, thereby assuring the convenience of the user.

According to an aspect of the present invention, a product of interest anticipatory shipping service providing device using an unmanned parcel box includes: a product of interest extracting unit which extracts a product of interest of the user based on shopping related information of a user collected by interworking with an online shopping mall service providing device which provides product information to a user device of the user, a shipment processing unit which generates shipment information to anticipatorily ship the product of interest to an unmanned parcel box which is the closest to an address according to member information of the user among a plurality of unmanned parcel boxes which is registered in advance; a message transmitting unit which transmits a push message to the user device of the user corresponding to the shipment information when shipment of the product of interest is completed by the shipment processing unit according to the shipment information to make a payment for the product of interest which is shipped to the unmanned parcel box and receive the product; and a payment processing unit which perform a payment processing according to the payment information when the payment information according to the purchase of the product of interest is received from the user device and transmits unmanned parcel box information required to receive the product of interest from the unmanned parcel box in which the product of interest is deposited to the user device when the payment processing is performed.

In an embodiment of the present invention, the product of interest extracting unit may arbitrarily select a promotion product of a seller which is registered in advance and extract the selected promotion product as the product of interest.

In an embodiment of the present invention, the product of interest extracting unit may analyze a buyer type of products which are sold more than a predetermined number in a specific area to select one or more buyers corresponding to the buyer type who purchases the product the most among the buyers in the specific area and extract a promotion product which is similar to or same as the product as a recommendation product, the shipment processing unit may generate shipment information to ship the recommendation product to an address of an unmanned parcel box which is the closest to the selected buyer, the message transmitting unit may transmit a push message for receiving the recommendation product to a user device corresponding to the selected buyer.

In an embodiment of the present invention, the message transmitting unit may discern the unmanned parcel box which is selected correspondingly to the user based on the shipment information and transmit the previously stored unmanned parcel box information including an address of the discerned unmanned parcel box, an identification number, and a password to the user device.

In an embodiment of the present invention, the device may further include a return processing unit which performs a return processing on the product of interest when return information to reject receiving the product of interest or reject the purchase is received correspondingly to the push message.

In an embodiment of the present invention, when at least one of the return information and the payment information is not received within a predetermined period, the return processing unit may perform the return processing on the product of interest.

In an embodiment of the present invention, the product of interest extracting unit may select and extract the product of interest based on at least one of log information, cart information, and bookmark information which are stored correspondingly to the user, by interworking with the online shopping mall service providing device.

In an embodiment of the present invention, the product of interest extracting unit may select and extract a product corresponding to product information which is clicked or accessed more than a predetermined number of times of clicking or accessing based on the log information, as the product of interest.

According to an aspect of the present invention, a product of interest anticipatory shipping service providing method of a product of interest anticipatory shipping service providing device using an unmanned parcel box includes extracting a product of interest of the user based on shopping related information of a user collected by interworking with an online shopping mall service providing device which provides product information to a user device of the user; generating shipment information to anticipatorily ship the product of interest to an unmanned parcel box which is the closest to an address according to member information of the user among a plurality of unmanned parcel boxes which is registered in advance; transmitting a push message to the user device of the user corresponding to the shipment information when shipment of the product of interest according to the shipment information is completed to make a payment for the product of interest which is shipped to the unmanned parcel box and receive the product; and performing a payment processing according to the payment information when the payment information according to the purchase of the product of interest is received from the user device and transmitting unmanned parcel box information required to receive the product of interest from the unmanned parcel box in which the product of interest is deposited to the user device when the payment processing is performed.

A computer program implementing the product of interest anticipatory shipping service providing method using an unmanned parcel box may be stored in a non-transitory computer readable storage medium having a computer program recorded thereon.

According to the present invention, when a user hesitates to buy a product of interest, the product of interest is anticipatorily shipped so as to be purchased by the user, so that the purchase of the user is aggressively induced, thereby maximizing the sales and helping the user to make a decision to purchase the product.

Further, according to the present invention, the user may receive the product from a close parcel storage box as soon as the user makes the payment, which may significantly improve the convenience of the user.

Furthermore, when the user does not want to purchase the product of interest and requests to return the product or rejects to receive the product of interest, the return process may be performed using an unmanned parcel box and the returned product may be directly collected from the unmanned parcel box, so that the convenience of the user is increased and the return process is simply performed, thereby increasing efficiency.

### BRIEF DESCRIPTION OF THE DRAWINGS

FIG. 1 is an environmental view of a configuration of a product of interest anticipatory shipping service providing system using an unmanned parcel box according to an embodiment of the present invention.
FIG. 2 is a view of a configuration of a product of interest anticipatory shipping service providing device using an unmanned parcel box according to an embodiment of the present invention.
FIG. 3 is an exemplary view of an operation of a product of interest anticipatory shipping process of a product of interest anticipatory shipping service providing device using an unmanned parcel box according to an embodiment of the present invention.
FIG. 4 is an exemplary view of an operation of selecting an unmanned parcel box based on a user address of a product of interest anticipatory shipping service providing device using an unmanned parcel box according to an embodiment of the present invention.
FIG. 5 is an exemplary view of an operation of transmitting a push message to receive a product of interest of a product of interest anticipatory shipping service providing device using an unmanned parcel box according to an embodiment of the present invention.
FIG. 6 is an exemplary view of a push message which is transmitted by a product of interest anticipatory shipping service providing device using an unmanned parcel box according to an embodiment of the present invention.
FIG. 7 is an exemplary view of an operation of a payment process and a return process of a product of interest anticipatory shipping service providing device using an unmanned parcel box according to an embodiment of the present invention.
FIG. 8 is a flowchart of a product of interest anticipatory shipping service providing method using an unmanned parcel box according to an embodiment of the present invention.

### DETAILED DESCRIPTION OF THE EMBODIMENTS

It is noted that technical terms used in the present invention are used to just describe a specific embodiment and do not intend to limit the present invention. Further, if the technical terms used in the present invention are not particularly defined as other meanings in the present invention, the technical terms should be appreciated as meanings generally appreciated by those skilled in the art and should not be appreciated as excessively comprehensive meanings or excessively reduced meanings. Further, when the technical term used in the present invention is a wrong technical term that does not accurately express the spirit of the present invention, the technical term should be understood by being substituted by a technical term which can be correctly understood by those skilled in the art. In addition, a general term used in the present invention should be interpreted as defined in a dictionary or contextually, and should not be interpreted as an excessively reduced meaning.

In addition, singular expressions used in the present invention include plurals expressions unless they have definitely opposite meanings. In the present invention, it should not analyzed that a term such as "comprising" or "including" particularly includes various components or various steps disclosed in the specification and some component or some steps among them may not be included or additional components or steps may be further included.

In addition, terms including ordinal numbers, such as 'first' and 'second', used in the present invention can be used to describe various components, but the components should not be limited by the terms. The above terms are used only to discriminate one component from the other components. For example, a first component may be named a second component and similarly, the second component may also be named the first component, without departing from the scope of the present invention.

Hereinafter, preferable exemplary embodiment of the present invention will be described in more detail with reference to the accompanying drawings. Like reference numerals refer to like elements for easy overall understanding and a duplicated description of like elements will be omitted.

Further, in the following description, a detailed explanation of known related technologies may be omitted to avoid unnecessarily obscuring the subject matter of the present invention. Further, it is noted that the accompanying drawings are only for easily understanding the spirit of the present invention and it should not be interpreted that the spirit of the present invention is limited by the accompanying drawings.

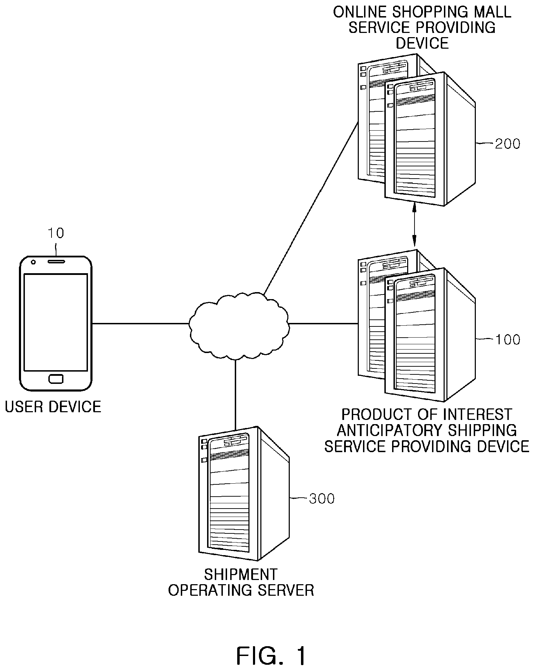

FIG. 1 is an environmental view of a configuration of a product of interest anticipatory shipping system using an unmanned parcel box according to an embodiment of the present invention. As illustrates in FIG. 1, the product of interest anticipatory shipping system includes an online shopping mall service providing device 200 which provides product information of various sellers to a user device 10 through a communication network and performs payment in association with a payment related server when the payment related to the product information is performed and a product of interest anticipatory shipping service providing device 100 which interworks with the online shopping mall service providing device 200 and collects various shopping related information of the user such as log information in accordance with access of a user device 10 to the online shopping mall service providing device 200 or cart information or bookmark information corresponding to a user of the user device 10 to analyze a product of interest of the user and anticipatorily ship the product of interest before the user purchases the corresponding product of interest.

With the above-described configuration, the product of interest anticipatory shipping service providing device 100 anticipatorily ships the product of interest which the user hesitates to purchase before the user purchases the product of interest to allow the user to receive the product of interest as soon as the user makes a payment so that it helps the user to make a decision to purchase the product of interest.

In this case, the product of interest anticipatory shipping service providing device 100 may extract a product of interest of the user based on various data such as log information generated when the user device 10 accesses various product sites included in an online shopping mall related web site provided by the online shopping mall service providing device 200, cart information registered in the online shopping mall site by the user device 10, bookmark information, and purchase history information.

Further, the product of interest anticipatory shipping service providing device 100 communicates a seller device 20 of a seller who sells the product of interest through a communication network and communicates with a plurality of deliverers who receive a request of the seller to ship the product and a shipment operating server 300 which manages a shipment status through the communication network.

By doing this, the product of interest anticipatory shipping service providing device 100 transmits order information for anticipatorily shipping the product of interest to the seller device 20 and the seller device 20 transmits the product of interest to the deliverer in accordance with the order information and then transmits the shipment information to the product of interest anticipatory shipping service providing device 100.

Thereafter, the product of interest anticipatory shipping service providing device 100 recognizes the shipment status of the product of interest which is shipped by the shipment operating server 300 based on the shipment information in real time.

In the meantime, the product of interest anticipatory shipping service providing device 100 uses a previously designated unmanned parcel box as a receiving destination of a user where the product of interest is received and thus inconvenience of the user generated when the product is directly shipped to the address of the user and repulsion generated when an undesired product is shipped to the address of the user may be avoided.

In this case, the unmanned parcel box (or an unmanned parcel storage box) is configured to store the product as a mediator when the product is sent or received, without directly delivering the product between the deliverer (shipper) and the user, to engage a parcel business.

Further, the product of interest anticipatory shipping service providing device 100 stores unmanned parcel box information on a plurality of previously designated unmanned parcel boxes, and supports the user who wants anticipatory shipment to easily receive the product of interest by anticipatorily shipping the product to an unmanned parcel box which is the closest to the address of the user according to member information stored in a DB 400.

Further, when the product of interest is stocked to the unmanned parcel box and the shipment is completed through the communication with the shipment operating server 300, the product of interest anticipatory shipping service providing device 100 transmits a push message to the user device 10 to notify the user that the product of interest is shipped. By doing this, the user easily recognizes that the product of interest is shipped and receives the product of interest from the unmanned parcel box after completing the payment.

As an example, the product of interest anticipatory shipping service providing device 100 induces the purchase of the product of interest through the push message. When the purchase (payment) of the product of interest is completed by communicating with the user device 10, the product of interest anticipatory shipping service providing device 100 may provide unmanned parcel box information including an identification number and a password of the unmanned parcel box into which the product of interest is stocked to the user device 10.

Therefore, the user inputs the password into the parcel box corresponding to the identification number of the corresponding unmanned parcel box based on the unmanned parcel box information to receive the product.

In the meantime, when the user does not want to purchase the product of interest and requests to return the product or rejects to receive the product of interest, the product of interest anticipatory shipping service providing device 100 transmits return information for returning the product of interest which is shipped to the unmanned parcel box corresponding to the user to the shipment operating server 300 so that the user does not need to perform a separate return process to return the product but the shipping company directly receives the returned product from the unmanned parcel box.

That is, when the user wants to return the received product of interest, the user re-deposits the product of interest in the unmanned parcel box from which the product of interest is received. When the user redeposits the product of interest, the user device 10 transmits the return information to the product of interest anticipatory shipping service providing device 100.

Therefore, when the return information is received, the product of interest anticipatory shipping service providing device 100 transmits the return information to the shipment operating server 300 to allow the shipping company to collect the returned product which is redeposited in the unmanned parcel box. By doing this, the user may return the product using the unmanned parcel box without inconveniently making contact with the shipping company to perform return process, which may increase the convenience of the user.

With the above-described configuration, according to the present invention, a product which the user hesitates to buy is anticipatorily shipped to support the user to receive immediately after making a payment, so that the purchase of the user is aggressively induced and a marketing effect and the sales according to the anticipatory shipment may be maximized.

Further, according to the present invention, it is possible to implement a revolutionary user experience which allows a user to immediately receive the product without waiting a time to ship the product and conveniently return the product when the user does not want to purchase the product, thereby assuring the convenience of the user.

In the above configuration, the user device 10 may be applied to various terminals such as a smart phone equipped with a communication function, a portable terminal, a mobile terminal, a personal digital assistant (PDA), a portable multimedia player (PMP) terminal, a telematics terminal, a navigation terminal, a personal computer, a notebook computer, a slate PC, a tablet PC, an Ultrabook, a wearable device (for example, including a smart watch, a smart glass, or a head mounted display (HMD)), a Wibro terminal, an internet protocol television (IPTV) terminal, a smart TV, a digital broadcasting terminal, an audio video navigation (AVN) terminal, an audio/video (A/V) system, or a flexible terminal.

Further, an example of the above-described communication network may include a wireless communication network such as wireless LAN (WLAN), digital living network alliance (DLNA), wireless broadband (Wibro), world interoperability for microwave access (Wimax), global system for mobile communication (GSM), code division multi access (CDMA), code division multi access 2000 (CDMA2000), enhanced voice-data optimized or enhanced voice-data only (EV-DO), wideband CDMA (WCDMA), high speed downlink packet access (HSDPA), high speed uplink packet access (HSUPA), IEEE 802.16, long term evolution (LTE), long term evolution-advanced (LTE-A), wireless mobile broadband service (WMBS), Bluetooth, radio frequency identification (RFID), infrared data association (IrDA), ultra-wideband (UWB), ZigBee, near field communication (NFC), ultra sound communication (USC), visible light communication (VLC), Wi-Fi, or Wi-Fi direct and a wired communication network such as power line communication (PLC), USB communication, Ethernet, serial communication, or an optical/coaxial cable.

Further, as described above, the product of interest anticipatory shipping service providing device 100, the online service providing device, and the shipment operating server 300 may be implemented in a form of various servers such as a web server, a database server, and a proxy server.

Further, in the service providing device, one or more of various software which allows a network load distribution mechanism or a service device to operate on the Internet or other networks may be installed, and as a result, the service providing device may be implemented by a computerized system.

Further, the network may be an http network and may be a private line, Intranet, or any other networks. Furthermore, the service providing device and the user device 10 may be connected to each other by a security network so as to suppress the data from being attacked by any hacker or other third parties. Further, the service providing device may include a plurality of database servers. The database server may be implemented to be separately connected with the service providing device through any type of network connection including a distributed database server architecture.

Furthermore, a part of the service providing device may be constituted by one server. For example, the product of interest anticipatory shipping service providing device 100 may be constituted to be included in the online shopping mall service providing device 200.

Hereinafter, a detailed operation embodiment of the product of interest anticipatory shipping service providing device 100 will be described below in more detail with reference to the drawings, by referring to the above-described configuration.

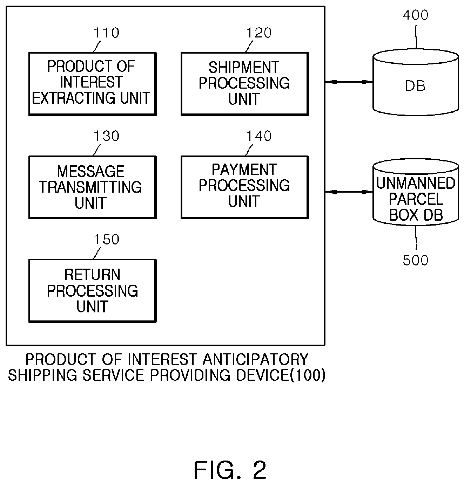

FIG. 2 is a view of a configuration of a product of interest anticipatory shipping service providing device 100 according to an embodiment of the present invention. As illustrated, the product of interest anticipatory shipping service providing device 100 includes a product of interest extracting unit 110, a shipment processing unit 120, a message transmitting unit 130, a payment processing unit 140, and a return processing unit 150.

The product of interest extracting unit extracts a product of interest of the user based on shopping related information of the user which is collected in association with the online shopping mall service providing device 200 which provides the product information to the user device 10 of the user.

The shipment processing unit 120 may generate shipment information to anticipatorily ship the product of interest to an unmanned parcel box which is the closest to the address according to the member information of the user among a plurality of unmanned parcel boxes which is registered in advance.

When the shipment of the product of interest according to shipment information of the shipment processing unit 120 is completed, the message transmitting unit 130 transmits a push message for making a payment or receiving the product of interest which is shipped to the unmanned parcel box to the user device 10 of the user corresponding to the shipment information.

When payment information according to purchase of the product of interest which is shipped from the user device 10 is received, the payment processing unit 140 processes the payment according to the payment information. When the payment processing is completed, the payment processing unit 140 may transmit unmanned parcel box information required to receive the product of interest from the unmanned parcel box in which the product of interest is stocked, to the user device 10.

In the meantime, when the user does not want to receive the product which is shipped in the unmanned parcel box from the user device 10 of the user, the return processing unit 150 may receive the return information to return the product of interest.

Hereinafter, an embodiment of a detailed operation of each constituent element included in the product of interest anticipatory shipping service providing device 100 will be described with reference to the above-described configuration.

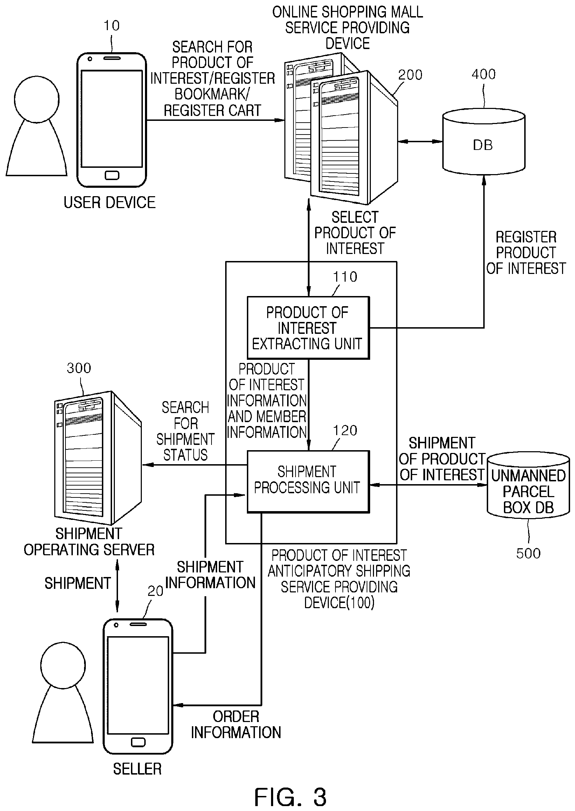

First, as illustrated in FIG. 3, the online shopping mall service providing device 200 provides an online shopping mall related web site to the user device 10 and provides the product information through the web site.

In this case, the online shopping mall service providing device 200 generates log information on the product related site which the user device 10 accessing the web site accesses or stores the product related site which is registered as a bookmark in a DB 400 correspondingly to the identification information of the user device 10.

Further, when the product of interest is registered through the web site, the online shopping mall service providing device 200 stores the product of interest information selected by the user in the DB 400 as cart information by matching with the member information of the user.

In the meantime, the product of interest extracting unit 110 of the product of interest anticipatory shipping service providing device 100 interworks with the online shopping mall service providing device 200 or accesses the communication network to collect various user product of interest related data such as user related log information, bookmark information, and cart information which are stored in the DB 400.

Thereafter, the product of interest extracting unit 110 may select the product of interest based on the collected data. For example, the product of interest extracting unit 110 selects a product corresponding to a product site registered as the bookmark information as the product of interest, selects a product corresponding to the product information registered in the cart information as the product of interest, or selects a product corresponding to product information (product site) which is clicked or accessed more than a predetermined number of times of clicking or accessing based on the log information, as the product of interest, and may select a product which is duplicated with the plurality of information selected from the bookmark information, the cart information, and the log information, as the product of interest.

In this case, when there is a plurality of selected products of interest, the product of interest extracting unit 110 may confirm only a product related to a product whose purchase frequency is equal to or larger than a predetermined reference value based on the purchase history information of the user stored in the DB 400 by matching the member information of the user, as the product of interest.

In the meantime, the product of interest extracting unit 110 extracts the product of interest information on the product of interest selected as a product of interest from the DB 400 and may store the product of interest information in the DB 400 by matching the member information of the user.

In this case, the product of interest extracting unit 110 may store the product of interest in the DB 400 by matching the member information of the user in a purchasing status of the product of interest.

Further, the product of interest extracting unit 110 extracts product of interest information and member information corresponding to the user from the DB 400 to provide the information to the shipment processing unit 120.

In the meantime, the shipment processing unit 120 selects unmanned parcel box information corresponding to an unmanned parcel box which is the closest to the address of the user from the unmanned parcel box DB 500 in which information on a plurality of unmanned parcel boxes is stored, based on the address information of the user included in the member information and generates order information having the selected unmanned parcel box as a shipping destination.

The above process will be described in detail. The shipment processing unit 120 compares an address of the unmanned parcel box included in unmanned parcel box information stored in the unmanned parcel box DB 500 and address of the user included in the member information when the product of interest information and the member information are received to select the closest unmanned parcel box and may generate order information including unmanned parcel box information corresponding to the selected unmanned parcel box, the product of interest information, and member information.

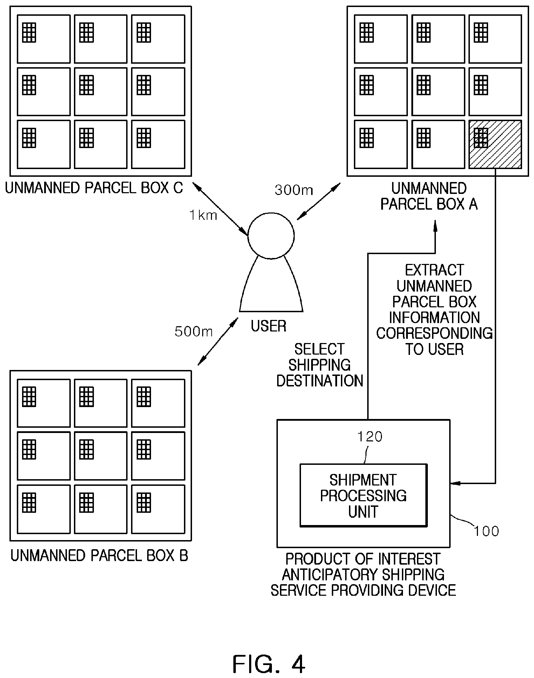

An example thereof will be described in detail with reference to FIG. 4. As illustrated in FIG. 4, the shipment processing unit 120 may designate an unmanned parcel box which is the closest to the address of the user based on the address information included in the member information of the user and select one of a plurality of parcel boxes which constitutes the unmanned parcel box as the shipping destination of the product of interest.

For example, the shipment processing unit 120 selects an unmanned parcel box A which is the closest to the address according to the address information of the user and extracts unmanned parcel box information including an address where the unmanned parcel box A is located, an identification number of a parcel box selected from the plurality of parcel boxes which constitutes the unmanned parcel box A, and a password corresponding to the selected parcel box from the unmanned parcel box DB 500 to be included in the order information of the product of interest. Further, the shipment processing unit 120 may register the unmanned parcel box information in the web site or transmit the unmanned parcel box information to the seller device 20.

In this case, the unmanned parcel box information includes information on the address where the unmanned parcel box is located, the identification number of the unmanned parcel box, the password designated to the unmanned parcel box, and the like.

Here, the shipment processing unit 120 periodically changes the password of the unmanned parcel box to a different password.

Further, the member information included in the order information may include only some of information included in the member information registered in the DB 400 such as a name, an address, and a contact number of the user.

In the meantime, the shipment processing unit 120 may transmit the order information to ship the product of interest to the selected unmanned parcel box, to the seller device 20 of a seller who sells the product of interest according to the product of interest information when the product of interest information is received.

In this case, when an operator of the online shopping mall service providing device 200 is a seller, the shipment processing unit 120 registers the order information in the DB 400 to provide the order information so as to allow the seller to confirm the order information by accessing the web site.

By doing this, the seller of the product of interest creates invoice information for shipping the product to the unmanned parcel box according to the order information and may transmit shipment information including the corresponding invoice information to the shipment processing unit 120 of the product of interest anticipatory shipping service providing device 100 when shipment of the product of interest is completed.

In this case, the invoice information may include information on an invoice number, shipping company information, and the like. The shipment information may include the same information as the order information in addition to the invoice information and may further include seller information on the seller of the product of interest.

Next, when the seller ships the product of interest, the shipment processing unit 120 receives shipment information including the invoice information from the seller device 20 or may receive the shipment information which is manually input by the seller through a user interface included in the product of interest shipping service providing device.

In this case, the shipment processing unit 120 communicates with the shipment operating server 300 which provides the shipping service through a communication network, searches for the shipment operating server 300 based on the invoice number included in the shipment information received from the seller to receive real-time shipment status information for the product of interest from the shipment operating server 300.

Here, the shipment status information may include information on a current shipping location and a status (loaded, unloaded, stored, unstored, shipment completed, or the like) of the product of interest.

Next, the shipment processing unit 120 determines whether the shipment of the product of interest is completed based on the shipment status information and may provide the shipment information on the product of interest to the message transmitting unit 130 when the shipment is completed.

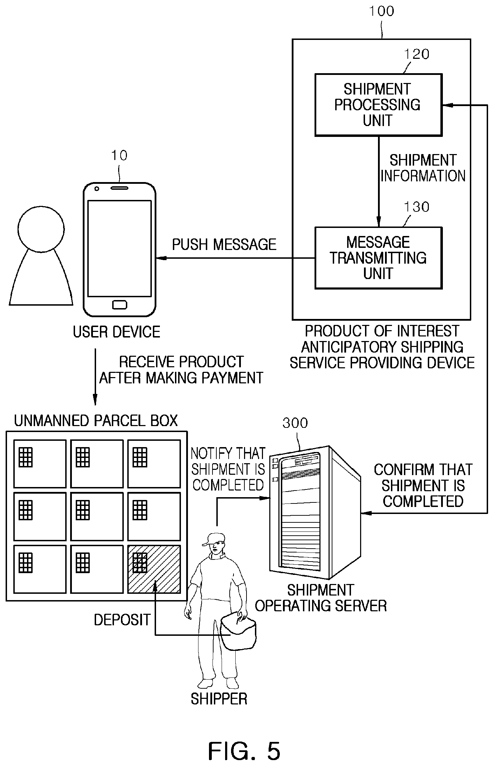

In the meantime, according to the above-described configuration, when the shipment is completed, the shipment processing unit 120 may provide the shipment information and the member information of the user to the message transmitting unit 130 which is constituted in the product of interest anticipatory shipping service providing device 100. The message transmitting unit 130 notifies that the product of interest of the user is anticipatorily shipped based on the shipment information and the member information and generates a push message notifying to receive the product of interest after making a payment to transmit the push message to the user device 10, so that the user may receive and checks the product of interest as soon as the user purchases (pays) the product of interest. This will be described in more detail with reference to the configuration of FIG. 5.

As described above, the shipment processing unit 120 may confirm that the shipment of the product of interest to the unmanned parcel box designated correspondingly to the user is completed, based on the shipment status information of the shipment operating server 300.

In this case, a shipper device of a shipper which communicates with the shipment operating server 300 through a communication network transmits information on a current shipping location and a status of the product of interest to the shipment operating server 300 to register the information. The shipment operating server 300 may update the shipment status information based on the corresponding information in real time.

Further, the shipment processing unit 120 stores the shipment status information in the DB 400 correspondingly to the member information of the user and may update the shipment status information stored in the DB 400 in real time in association with the shipment operating server 300.

Therefore, the shipment processing unit 120 determines whether the product of interest is completely deposited in the unmanned parcel box based on the shipment status information and may determine whether the shipment is completed based on the shipment status information which is updated when the product of interest is deposited in the unmanned parcel box corresponding to the user.

Next, when the shipment is completed, the shipment processing unit 120 provides shipment information on the product of interest to the message transmitting unit 130.

In the meantime, the message transmitting unit 130 receives the shipment information from the shipment processing unit 120 and generates a push message based on the shipment information to transmit the push message to the user device 10.

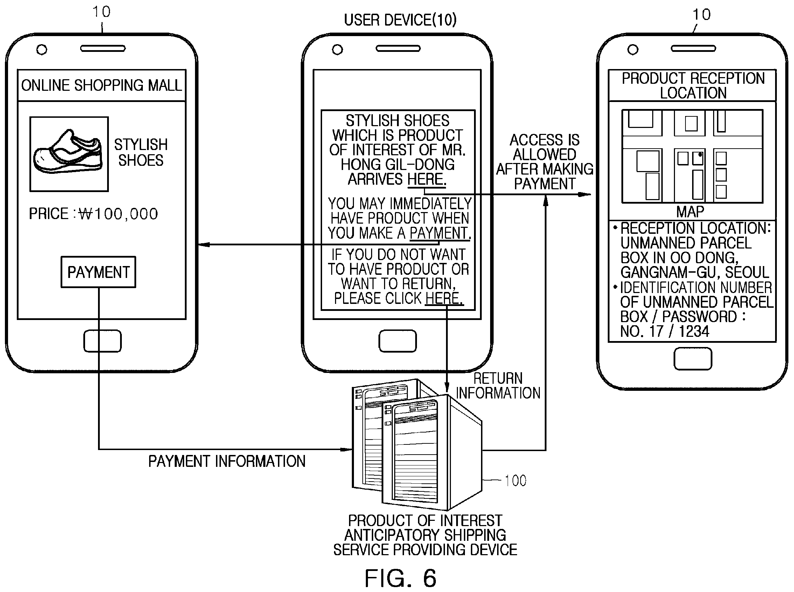

Here, as illustrated in FIG. 6, the push message may include link information on a product site of the product of interest, link information for a payment processing of the corresponding product of interest, and link information for a return processing of the product of interest. Further, the push message may include link information on unmanned parcel box information including a location (address) of the unmanned parcel box in which the product of interest is deposited, an identification number of the parcel box, and a password of the parcel box.

In this case, the link information on the unmanned parcel box information may include an accessing address for accessing the corresponding unmanned parcel box information stored in the DB 400.

Further, the product of interest anticipatory shipping service providing device 100 restricts the access according to the link information on the unmanned parcel box information before making a payment, which will be described in detail below.

In the meantime, the user device 10 which receives the push message displays the push message through a display unit which is constituted in the user device 10 to allow the user to easily receive the product and make a payment.

In this case, the user device 10 may be constituted by various constituent elements such as an input unit, a display unit, a communication unit, a storage unit, a voice output unit, and a control unit.

The input unit receives a signal according to a button operation of the user or any function selection, receives a command or a control signal created by an operation such as an operation of touching/scrolling the displayed screen, or receives the signal corresponding to the information inputted by the user. The input unit may use various devices such as a key pad, a dome switch, a touch pad (a pressure resistive type/a capacitive resistive type), a touch screen, a jog wheel, a jog switch, a jog shuttle, a mouse, a stylus pen, and a touch pen.

Further, the display device may display various contents such as various menu screens using a user interface and/or graphic user interface stored in the storing unit, by the control of the control unit. Here, the contents displayed on the display unit may include a menu screen including various texts, image data (including various information data), and data such as icons, a list menu, or a combo box. Further, the display unit may be a touch screen.

In this case, a touch sensor which detects a touch gesture of the user may be included. The touch sensor may be any one of various types such as a capacitive type, a decompressive type, or a piezoelectric type. In the case of the capacitive type, when a part of a user's body touches a surface of the touch screen by using a dielectric coated on the surface of the touch screen, a touch coordinate is calculated by sensing minute electricity excited to the user's body. In the case of the decompressive type, two electrode plates are embedded in the touch screen, and when the user touches the screen, upper and lower electrode plates contact each other at the touched position and then current flows, and the touch coordinate is calculated by sensing the flow of the current.

In addition to this, the user equipment 10 supports a pen input function. In this case, a gesture of the user utilizing an input unit such as a pen, instead of the part of the body of the user, may be detected. For example, when the input unit is a stylus pen in which a coil is included, the user equipment 10 may include a magnetic field detecting sensor which senses a magnetic field changed by the coil in the stylus pen. In this case, an approaching gesture of the user such as hovering in addition to the touch gesture of the user may be sensed.

Further, the display unit may be implemented by at least one of a liquid crystal display (LCD), a thin film transistor liquid crystal display (TFT LCD), an organic light emitting diode (OLED), a flexible display, a three dimensional display (3D display), an e-ink display, and a light emitting diode (LED) and also include a driving circuit and a back light unit therefor.

Further, the display unit may be configured as a stereoscopic display unit which displays a stereoscopic image.

A 3D display type such as a stereoscopic type (a glasses type), an auto-stereoscopic type (a glassless type), and a projection type (a holographic type) may be applied to the stereoscopic display unit.

Further, the display unit displays a credit card number of a mobile card (or including a mobile credit card, a check card, and a prepaid card) which is issued from a payment related server by the control of the control unit.

The voice output unit outputs voice information included in a predetermined signal processed signal by the control unit. Here, the voice output unit may include a receiver, a speaker, a buzzer, and the like.

Further, the voice output unit outputs a guidance voice generated by the control unit.

Further, the voice output unit outputs voice information corresponding to the credit card number of a mobile card (or including a mobile credit card, a check card, and a prepaid card) which is issued from a payment related server by the control of the control unit.

The communication unit connects an arbitrary internal component with at least one arbitrary external terminal through a wired/wireless communication network to communicate each other. In this case, the arbitrary external terminal may include a network service system and a server.

Further, the communication unit may support a wireless communication scheme such as wireless LAN (WLAN), digital living network alliance (DLNA), wireless broadband (Wibro), world interoperability for microwave access (Wimax), global system for mobile communication (GSM), code division multi access (CDMA), code division multi access 2000 (CDMA2000), enhanced voice-data optimized or enhanced voice-data only (EV-DO), wideband CDMA (WCDMA), high speed downlink packet access (HSDPA), high speed uplink packet access (HSUPA), IEEE 802.16, long term evolution (LTE), long term evolution-advanced (LTE-A), wireless mobile broadband service (WMBS), Bluetooth, radio frequency identification (RFID), infrared data association (IrDA), ultra-wideband (UWB), ZigBee, near field communication (NFC), ultra sound communication (USC), visible light communication (VLC), Wi-Fi, or Wi-Fi direct. Further, the communication unit 160 may support a wired communication scheme such as PLC (power line communication), USB communication, Ethernet, serial communication, or an optical/coaxial cable.

The control unit performs an overall control function of the user equipment 10 using a program and data stored in the storing unit. The control unit may include a RAM, a ROM, a CPU, a GPU, and a bus and the RAM, the ROM, the CPU, the GPU, and the like are connected to each other through the bus. The CPU accesses the storage unit to perform a booting operation using an operating system (O/S) stored in the storage unit and may perform various operations using various programs, contents, data, and the like stored in the storage unit.

Further, the storage unit stores data and programs required to operate the user device 10.

That is, the storage unit may store a plurality of application programs (or applications) which are driven in the user device 10 and data and commands for operation of the user device 10. At least some of the application programs may be downloaded from an external server through wireless communication. Further, at least some of the application programs may be provided on the user device 10 since a releasing time in order to support a basic function (for example, phone call receiving and sending functions, message receiving and transmitting functions) of the user device 10. In the meantime, the application program is stored in the user equipment storing unit and provided in the user device 10 to be driven to perform an operation (or a function) of the user device 10 by the user device control unit.

Further, the storage unit may include at least one storage medium of a flash memory type, a hard disk type, a multimedia card micro type, a card type memory (for example, an SD, XD memory, or the like), a magnetic memory, a magnetic disk, an optical disk, a RAM, an SRAM, a ROM, an EEPROM, and a PROM. Further, the user device 10 may operate a web storage which performs a storing function of the user equipment storing unit on the Internet or operate in association with the web storage.

Further, the storage unit stores a credit card number of a mobile card (or including a mobile credit card, a check card, and a prepaid card) which is issued from a payment related server by the control of the control unit.

Further, the user device 10 may further include an interface unit (not illustrated) which functions as an interface with all external apparatuses which are connected to the user device 10.

For example, the interface unit may be constituted by a wired/wireless headset port, an external charger port, a wired/wireless data port, a memory card port, a port connecting devices with identification modules, an audio input/output (I/O) port, a video input/output (I/O) port, an earphone port, and the like. Here, the identification module is a chip which stores various information for authenticating a permission of the user device 10 and may include a user identity module (UIM), a subscriber identity module (SIM), a universal subscriber identity module (USIM), and the like. Further, the device provided with the identification module may be prepared in a smart card form. Accordingly, the identification module may be connected with the user device 10 through the port. Such an interface unit receives data or power from an external device to transmit the received data or power to each component in the user device 10 or transmit the data in the user device 10 to the external device.

Further, the interface unit may be a passage through which the power from a cradle is supplied to the corresponding user device 10 when the user device 10 is connected to an external cradle or a passage through which various command signals input from the cradle by the user is transferred to the corresponding user device 10. Various command signals input from the cradle or the corresponding power may also operate by a signal for recognizing that the user device 10 is accurately installed on the cradle.

Further, the user device 10 may further include an input unit (not illustrated) for receiving a signal according to a button operation of the user or any function selection or receiving a command or a control signal created by an operation such as an operation of touching/scrolling the displayed screen.

With the above-described configuration, the user may confirm the push message displayed on the display unit of the user device 10 to confirm that the product of interest is deposited in the unmanned parcel box.

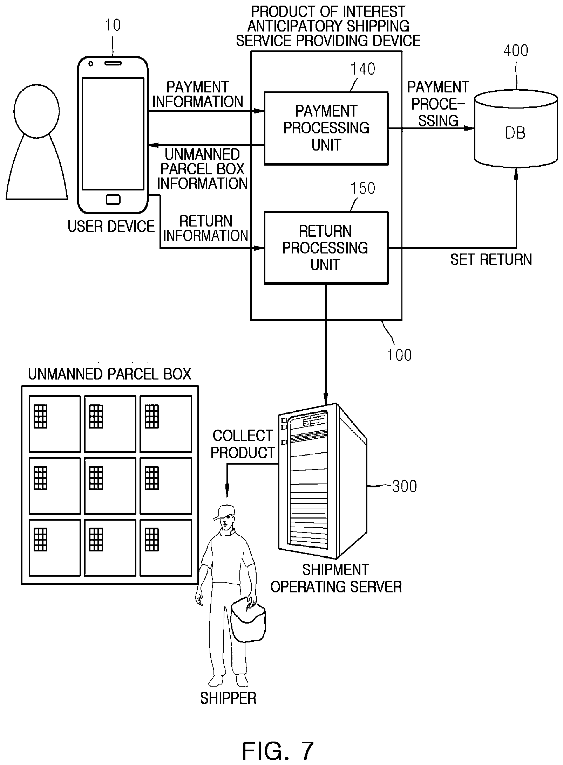

Next, when the user wants to receive the product of interest, the user may receive the product of interest after making a payment or when the user does not want the product of interest, the user may perform a return processing. The configuration therefor will be described in detail with reference to FIGS. 6 and 7.

First, as illustrated in FIG. 6, when the user selects payment related link information from the push message displayed on the user device 10, the user device 10 may access the payment processing unit 140 of the product of interest anticipatory shipping service providing device 100.

By doing this, as illustrated in FIG. 7, the payment processing unit 140 searches for member information corresponding to the user in the DB 400 based on the identification information of the user device 10 which accesses through the link information, extracts product of interest information which matches correspondingly to the member information, and provide the payment site related information for making a payment for the product of interest information to the user device 10, as illustrated in FIG. 6.

Here, the identification information of the user device 10 includes a mobile directory number (MDN) of the user device 10, a mobile IP, a mobile MAC, subscriber identify module (Sim) card unique information, and a serial number.

Next, the user device 10 inputs the payment information through the payment site to transmit the payment information to the payment processing unit 140 of the product of interest anticipatory shipping service providing device 100.

In this case, the payment information may include various information such as identification information of the user device 10, payment means related information (a check card, a credit card, mobile payment related information, or the like), and a password.

In the meantime, when receiving the payment information from the user device 10, the payment processing unit 140 performs the payment processing by communicating with a payment related server such as a VAN company server, a card company server, and a communication company server. When the payment is completed, the product of interest information which is stored in the DB 400 by matching the user member information and is being purchased is updated to purchase confirmed.

Next, when the payment processing is completed, the payment processing unit 140 inputs link information for accessing the unmanned parcel box information included in the push message so as to allow the user to receive the purchase confirmed product of interest to allow the accessing user device to access. Further, the payment processing unit selects link information on the unmanned parcel box information to transmit the unmanned parcel box information to the accessing user device 10.

Therefore, as illustrated in FIG. 6, the user device 10 of the user may display the location (address) of the unmanned parcel box, the identification number of the unmanned parcel box, and the password according to the unmanned parcel box information, on the display unit and the user may arrive at the corresponding unmanned parcel box to input the password, thereby receiving the product of interest which is deposited in the unmanned parcel box.

With the above-described configuration, the payment processing unit 140 may allow the access according to the link information on the unmanned parcel box information included in the push message regardless of the payment. By doing this, the payment processing unit may transmit the unmanned parcel box information to the user device 10 before making a payment.

By doing this, the user may check the product of interest which is deposited in the unmanned parcel box before purchase (payment). When the user wants the product of interest, the user may select the payment related link information included in the push message.

Therefore, the payment processing unit 140 receives the payment information from the user device 10 to confirm the purchase of the product of interest by the user.

That is, according to the embodiment of the present invention, the product of interest which is deposited in advance in the unmanned parcel box is provided to the user to check the product before purchasing the product of interest which the user hesitates to purchase. Therefore, it may help to determine whether to purchase the product of interest.

In the meantime, as illustrated in FIG. 6, when the user does not want to receive the product of interest or when the user does not want the product and perform the return processing after checking the product of interest, the user device 10 may access the return processing unit 150 of the product of interest anticipatory shipping service providing device 100 according to an accessing address linked to the return related link information based on the selection input of the user for the return related link information included in the push message.

Therefore, as illustrated in FIG. 7, the return processing unit 150 transmits a return site for the return processing to the user device 10. When the return information of the user device 10 is received through the return site, the return processing unit 150 confirms product of interest information in a purchase pending status which is stored in the DB 400 by matching the member information of the user to be a return status and may register the return information of the returned product of interest by matching the member information of the user.

Further, when the return information is received, the return processing unit 150 may transmit return notification information to the shipment operating server 300 to collect the product of interest which is shipped to the unmanned parcel box corresponding to the user.

Therefore, when the return notification information is received, the shipment operating server 300 allocates a shipper who collects the product of interest and provides the information for collecting the product to the corresponding shipper device so that the shipper collects the product of interest which is stored in the unmanned parcel box again to deliver the product to the seller.

In the meantime, in the above-described configuration, the return processing unit 150 receives the shipment information from the message transmitting unit 130 or the shipment processing unit 120 to determine a shipment status based on the shipment status information stored in the DB 400 correspondingly to the shipment information and interworks with the payment processing unit 140 since the shipment is completed according to the shipment status determination. When at least one of the return information and the payment information is not received within a predetermined period, the return processing unit may perform the return processing on the product of interest as described above.

Further, when the return information is received, the return processing unit 150 interworks with the payment processing unit 140 to refund an amount paid for the product of interest.

Furthermore, when a product corresponding to the return information is selected as a product of interest again based on the return information registered in the DB 400 correspondingly to the user at the time of selecting the product of interest later, the product of interest extracting unit 110 excludes the product so that the product corresponding to the return information is not anticipatorily shipped to the user.

In the meantime, the product of interest anticipatory shipping service providing device 100 arbitrarily selects a promotion product of a seller which is registered in advance based on the above-described configuration, to select and extract the promotion product as a product of interest and ships the promotion product to an unmanned parcel box which is close to the latest recipient address only for an arbitrarily selected client to be utilized as marketing and sales channels.

Further, in order to select a buyer or a receiving destination to which the promotion product is shipped, the product of interest extracting unit 110 analyzes a type, a price, and a buyer type of products which are sold more than a predetermined number in a specific area to select one or more buyers corresponding to the buyer type who purchases the product the most among the buyers in the area and extract a promotion product which is similar to or same as the product as a recommendation product.

Therefore, the shipment processing unit 120 generates shipment information for shipping the promotion product to the address of the unmanned parcel box which is set correspondingly to the selected buyer and the message transmitting unit 130 may transmit a push message for receiving the promotion product to the user device 10 corresponding to the selected buyer.

By doing this, according to the embodiment of the present invention, a buyer who has a higher possibility of purchasing the promotion product in a specific area through analysis of an area and a buyer is selected to perform anticipatory shipment.

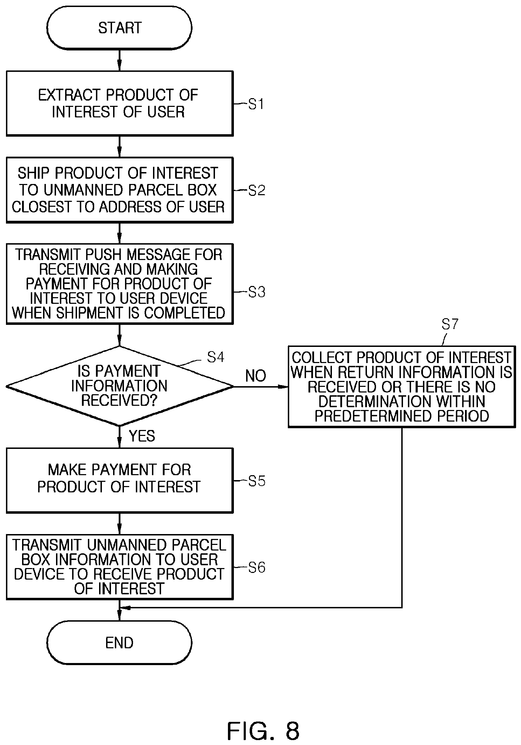

FIG. 8 is a flowchart of a product of interest anticipatory shipping method of a product of interest anticipatory shipping service providing device 100 using an unmanned parcel box according to an embodiment of the present invention.

An online shopping mall service providing device 200 provides an online shopping mall related web site to the user device 10 and provides the product information through the web site.

In this case, the online shopping mall service providing device 200 generates log information on the product related site which the user device accessing the web site accesses or may store the product related site which is registered as a bookmark in a DB 400 correspondingly to the identification information of the user device 10.

Further, when the product of interest is registered through the web site, the online shopping mall service providing device 200 may store the product of interest information selected by the user in the DB 400 as cart information by matching with the member information of the user.

In the meantime, the product of interest anticipatory shipping service providing device 100 interworks with the online shopping mall service providing device 200 or accesses the communication network to collect various user product of interest related data such as user related log information, bookmark information, and cart information which are stored in the DB 400.

Next, the product of interest anticipatory shipping service providing device 100 may select the product of interest based on the collected data. For example, the product of interest extracting unit 110 selects a product corresponding to a product site registered as the bookmark information as the product of interest, selects a product corresponding to the product information registered in the cart information as the product of interest, or selects a product corresponding to product information (product site) which is clicked or accessed more than a predetermined number of times of clicking or accessing based on the log information, as the product of interest, and selects a product which is duplicated with the plurality of information selected from the bookmark information, the cart information, and the log information, as the product of interest (S1).

In this case, when there is a plurality of selected products of interest, the product of interest anticipatory shipping service providing device 100 may confirm only a product related to a product whose purchase frequency is equal to or larger than a predetermined reference value based on the purchase history information of the user stored in the DB 400 by matching the member information of the user and a product having a similarity which is higher than a predetermined reference value, as the product of interest.

In the meantime, the product of interest anticipatory shipping service providing device 100 extracts the product of interest information on the product of interest selected as a product of interest from the DB 400 and may store the product of interest information in the DB 400 by matching the member information of the user.

In this case, the product of interest anticipatory shipping service providing device 100 may store the product of interest in the DB 400 by matching the member information of the user in a purchasing status of the corresponding product of interest.

Further, the product of interest anticipatory shipping service providing device 100 may extract product of interest information and member information corresponding to the user from the DB 400.

In the meantime, the product of interest anticipatory shipping service providing device 100 selects unmanned parcel box information corresponding to an unmanned parcel box which is the closest to the address of the user from the unmanned parcel box DB 500 in which the unmanned parcel box information on a plurality of unmanned parcel boxes is stored, based on the address information of the user included in the member information and generates order information of the product of interest having the selected unmanned parcel box as a shipping destination.

The above process will be described in detail. The product of interest anticipatory shipping service providing device 100 compares an address of the unmanned parcel box included in unmanned parcel box information stored in the unmanned parcel box DB 500 and address of the user included in the member information to select the closest unmanned parcel box and may generate order information including unmanned parcel box information corresponding to the selected unmanned parcel box, the product of interest information, and member information.

In the meantime, the product of interest anticipatory shipping service providing device 100 may transmit order information for shipping the product of interest to the unmanned parcel box, to the seller device 20 of the seller who sells the product of interest.

In this case, when an operator of the online shopping mall service providing device 200 is a seller, the shipping processing unit 120 registers the order information in the DB 400 to provide the order information so as to allow the seller to confirm the corresponding order information by accessing the web site which is operated by the online shopping mall service providing device 200.

By doing this, the seller of the product of interest creates an invoice for shipping the product to the unmanned parcel box according to the order information and the seller device 20 of the seller transmits shipment information including the corresponding invoice information to the product of interest anticipatory shipping service providing device 100 when the shipment of the product of interest is completed.

In this case, the invoice information may include information on an invoice number, shipping company information, and the like. The shipment information may include the same information as the order information in addition to the invoice information and may further include seller information on the seller of the product of interest.

Next, when the seller ships the product of interest, the product of interest anticipatory shipping service providing device 100 receives shipment information including the invoice information from the seller device 20 or receives the shipment information which is manually input by the seller through a user interface included in the product of interest shipping service providing device.

In this case, the product of interest anticipatory shipping service providing device 100 communicates with the shipment operating server 300 which provides the shipping service through a communication network, searches for the shipment operating server 300 based on the invoice information included in the shipment information received from the seller to receive real-time shipment status information for the product of interest from the shipment operating server 300.

Next, the product of interest anticipatory shipping service providing device 100 determines whether the shipment of the product of interest is completed based on the shipment status information (S2).

In the meantime, with the above-described configuration, when the shipment is completed, the product of interest anticipatory shipping service providing device 100 notifies that the product of interest of the user is anticipatorily shipped based on the shipment information and generates a push message notifying that the corresponding product of interest may be received after making a payment to transmit the push message to the user device 10 (S3).

In the meantime, the user device 10 which receives the push message displays the corresponding push message through a display unit which is constituted in the user device 10 to allow the user to easily receive the product and make a payment.

Next, the user may receive the product of interest after making a payment when the user want to receive the product of interest or perform a return processing when the user does not want the product of interest (S4).

When the user selects payment related link information from the push message displayed on the user device 10, the user device 10 may access the product of interest anticipatory shipping service providing device 100.

By doing this, the product of interest anticipatory shipping service providing device 100 searches for member information corresponding to the user in the DB 400 based on the identification information of the user device 10 which accesses through the payment related link information, extracts product of interest information which matches correspondingly to the member information, and may provide the payment site related information for making a payment for the corresponding product of interest to the user device 10.

In this case, the identification information of the user device 10 includes a mobile directory number (MDN) of the user device 10, a mobile IP, a mobile MAC, subscriber identify module (Sim) card unique information, and a serial number.

Next, the user device 10 inputs the payment information through the payment site to transmit the payment information to the product of interest anticipatory shipping service providing device 100.

In this case, the payment information may include various information such as identification information of the user device 10, payment means related information (a check card, a credit card, mobile payment related information, or the like), and a password.

In the meantime, when receiving the payment information from the user devivce 10, the product of interest anticipatory shipping service providing device 100 performs the payment processing by communicating with a payment related server such as a VAN company server, a card company server, and a communication company server. When the payment is completed, the product of interest information which is stored in the DB 400 by matching the user member information and is being purchased is updated to purchase confirmed (S5).

Next, when the payment processing is completed, the product of interest anticipatory shipping service providing device 100 inputs link information for accessing the unmanned parcel box information included in the push message so as to allow the user to receive the purchase confirmed product of interest to allow the accessing user device 10 to access. Further, the product of interest anticipatory shipping service providing device 100 selects link information on the unmanned parcel box information to transmit the unmanned parcel box information to the accessing user device 10 (S6).

Therefore, the user device 10 of the user may display the location (address) of the unmanned parcel box, the identification number of the unmanned parcel box, and the password according to the unmanned parcel box information, on the display unit and the user may arrive at the corresponding unmanned parcel box to input the password, thereby receiving the product of interest which is deposited in the unmanned parcel box.

In the meantime, when the user does not want to receive the product of interest or when the user does not want the product and perform the return processing after checking the product of interest, the user device 10 may access the product of interest anticipatory shipping service providing device 100 according to an accessing address linked to the return related link information based on the selection input of the user for the return related link information included in the push message.

Therefore, the product of interest anticipatory shipping service providing device 100 transmits return site related data for the return processing to the user device 10. When the return information of the user device 10 is received through the corresponding return site, the product of interest anticipatory shipping service providing device 100 may confirm product of interest information in a purchase pending status which is stored in the DB 400 by matching the member information of the user to be a return status and register the return information of the returned product of interest by matching the member information of the user.

Further, when the return information is received, the product of interest anticipatory shipping service providing device 100 may transmit return notification information to the shipment operating server 300 to collect the product of interest which is shipped to the unmanned parcel box corresponding to the user.

Therefore, when the return notification information is received, the shipment operating server 300 allocates a shipper who collects the product of interest and provides the information for collecting the product to the corresponding shipper device so that the shipper collects the product of interest which is stored in the unmanned parcel box again to deliver the product to the seller.

In the meantime, in the above-described configuration, the product of interest anticipatory shipping service providing device 100 checks the shipment status based on the shipment information to determine when the shipment is completed and interworks with the payment processing unit 140 since the shipment is completed. When at least one of the return information and the payment information is not received within a predetermined period, the return processing unit may perform the return processing on the product of interest as described above (S7).

Furthermore, when a product corresponding to the return information is selected as a product of interest again based on the return information registered in the DB 400 correspondingly to the user at the time of selecting the product of interest later, the product of interest anticipatory shipping service providing device 100 excludes the product so that the product corresponding to the return information is not anticipatorily shipped to the user.

As described above, according to the present invention, when a user hesitates to buy a product of interest, the product of interest is anticipatorily shipped so as to be purchased by the user, so that the purchase of the user is aggressively induced, thereby maximizing the sales.

Further, according to the present invention, the user may receive the product from a close parcel storage box as soon as the user purchases the product, thereby significantly improving the convenience of the user.

Furthermore, when the user does not want to purchase the product of interest and requests to return the product or rejects to receive the product of interest, the return process may be performed using an unmanned parcel box and the returned product may be directly collected from the unmanned parcel box, so that the convenience of the user is increased, the return process is simply performed, thereby increasing efficiency.

The product of interest anticipatory shipping service providing method using an unmanned parcel box according to the embodiment of the present invention may be prepared with a computer program, and codes and code segments configuring the computer program may easily deduced by a computer programmer in the art. Further, the corresponding computer program is stored in a non-transitory computer readable storage medium, and read and executed by the computer or the product of interest anticipatory shipping service providing device 100 or the user device according to the exemplary embodiment of the present invention to implement the product of interest anticipatory shipping service providing method using an unmanned parcel box.

The non-transitory computer readable storage medium includes a magnetic storage medium, an optical storage medium, and a carrier wave medium. The computer program implementing the product of interest anticipatory shipping service providing method using an unmanned parcel box according to the embodiment of the present invention may be stored and installed in embedded memories of the product of interest anticipatory shipping service providing device 100, the user device 10, and the like. Alternatively, external memories such as a smart card storing and installing the computer program implementing the product of interest anticipatory shipping service providing method using an unmanned parcel box according to the embodiment of the present invention may be installed on the product of interest anticipatory shipping service providing device 100, the user device 10, and the like through an interface.

Various devices and components described in this specification may be implemented by a hardware circuit (for example, a CMOS based logic circuit), a firmware, software, or a combination thereof. For example, the devices and components may be implemented using a transistor, a logic gate, and an electronic circuit in the form of various electrical structures.

Hereinabove, although the present invention is described by specific matters such as concrete components, and the like, embodiments, and drawings, they are provided only for assisting in the entire understanding of the present invention. Therefore, the present invention is not limited to the embodiments. Various modifications and changes may be made by those skilled in the art to which the present invention pertains from this description. Therefore, the spirit of the present invention should not be limited to the above-described embodiments, and the following claims as well as all modified equally or equivalently to the claims are intended to fall within the scope and spirit of the invention.

The present invention anticipatorily ships a product of interest which the user hesitates to buy to support the user to purchase the product of interest, so that the purchase of the user is aggressively induced, thereby maximizing the sales and support the user to receive the product from the close parcel storage box as soon as the user makes a payment, thereby improving convenience of the user and can be widely used in an online shopping mall service system field, a payment system field, a shipping system field, a marketing system field, and the like.

## Claims

1. A product of interest anticipatory shipping service providing device using an unmanned parcel box, the device comprising:
a product of interest extracting unit which extracts a product of interest of the user based on shopping related information of a user collected by interworking with an online shopping mall service providing device which provides product information to a user device of the user;
a shipment processing unit which generates shipment information to anticipatorily ship the product of interest to an unmanned parcel box which is the closest to an address according to member information of the user among a plurality of unmanned parcel boxes which is registered in advance;
a message transmitting unit which transmits a push message to the user device of the user corresponding to the shipment information when shipment of the product of interest is completed by the shipment processing unit according to the shipment information to make a payment for the product of interest which is shipped to the unmanned parcel box and receive the product; and
a payment processing unit which perform a payment processing according to the payment information when the payment information according to the purchase of the product of interest is received from the user device and transmits unmanned parcel box information required to receive the product of interest from the unmanned parcel box in which the product of interest is deposited to the user device when the payment processing is performed.

2. The device of claim 1, wherein the product of interest extracting unit arbitrarily selects a promotion product of a seller which is registered in advance and extracts the selected promotion product as the product of interest.

3. The device of claim 1, wherein the product of interest extracting unit analyzes a buyer type of products which are sold more than a predetermined number in a specific area to select one or more buyers corresponding to the buyer type who purchases the product the most among the buyers in the corresponding specific area and extract a promotion product which is similar to or same as the product as a recommendation product, and
the shipment processing unit generates shipment information to ship the recommendation product to an address of an unmanned parcel box which is the closest to the selected buyer, and
the message transmitting unit transmits a push message for receiving the recommendation product to a user device corresponding to the selected buyer.

4. The device of claim 1, wherein the message transmitting unit discerns the unmanned parcel box which is selected correspondingly to the user based on the shipment information and transmits the previously stored unmanned parcel box information including an address of the discerned unmanned parcel box, an identification number, and a password to the user device.

5. The device of claim 1, wherein further comprising: a return processing unit which performs a return processing on the product of interest when return information to reject receiving the product of interest or reject the purchase is received correspondingly to the push message.

6. The device of claim 5, wherein when at least one of the return information and the payment information is not received within a predetermined period, the return processing unit performs the return processing on the product of interest.

7. The device of claim 1, wherein the product of interest extracting unit selects and extracts the product of interest based on at least one of log information, cart information, and bookmark information which are stored correspondingly to the user, by interworking with the online shopping mall service providing device.

8. The device of claim 7, wherein the product of interest extracting unit selects and extracts a product corresponding to product information which is clicked or accessed more than a predetermined number of times of clicking or accessing based on the log information, as the product of interest.

9. A product of interest anticipatory shipping service providing method of a product of interest anticipatory shipping service providing device using an unmanned parcel box, the method comprising:
extracting a product of interest of the user based on shopping related information of a user collected by interworking with an online shopping mall service providing device which provides product information to a user device of the user;
generating shipment information to anticipatorily ship the product of interest to an unmanned parcel box which is the closest to an address according to member information of the user among a plurality of unmanned parcel boxes which is registered in advance;
transmitting a push message to the user device of the user corresponding to the shipment information when shipment of the product of interest according to the shipment information is completed to make a payment for the product of interest which is shipped to the unmanned parcel box and receive the product; and
performing a payment processing according to the payment information when the payment information according to the purchase of the product of interest is received from the user device and transmitting unmanned parcel box information required to receive the product of interest from the unmanned parcel box in which the product of interest is deposited to the user device when the payment processing is performed.

10. A non-transitory computer readable storage medium having a computer program recorded thereon configured to perform the method of claim 9.
